# EUROPEAN PATENT SPECIFICATION

(11) **EP 3 778 676 B1**
(45) Date of publication and mention of the grant of the patent: **11.10.2023**
(21) Application number: 19775948.3
(22) Date of filing: 06.03.2019
(51) Int. Cl.: C08F 236/04, C08F 2/24, G01N 30/26, G01N 30/88

(54) **METHOD FOR PRODUCING CONJUGATED-DIENE-BASED COPOLYMER LATEX**
VERFAHREN ZUR HERSTELLUNG VON COPOLYMERLATEX AUF BASIS VON KONJUGIERTEM DIEN
PROCÉDÉ DE PRODUCTION D'UN LATEX COPOLYMÈRE À BASE DE DIÈNE CONJUGUÉ

(30) Priority: 30.03.2018 JP 2018066936
(43) Date of publication of application: 17.02.2021
(73) Proprietor: Nippon A&L Inc., Osaka-shi, Osaka 541-8550 (JP)
(72) Inventor: OKAMOTO, Natsuki, Osaka-shi, Osaka 554-8558 (JP); NAKAMORI, Hiroshi, Osaka-shi, Osaka 554-8558 (JP)
(74) Representative: Vossius & Partner Patentanwälte Rechtsanwälte mbB
(86) International application number: PCT/JP2019/008934
(87) International publication number: WO 2019/188074

(56) References cited:
- EP-A1- 0 426 280
- JP-A- H04 228 682
- JP-A- 2002 069 893
- JP-A- 2007 131 964
- JP-A- 2010 070 899
- JP-A- 2014 169 403
- JP-A- 2015 515 488
- US-A- 5 648 420
- DATABASE WPI Week 201744 Thomson Scientific, London, GB; AN 2017-41942A XP002802799, & JP 2017 110084 A (NIPPON A & L KK) 22 June 2017 (2017-06-22)

## Description

### Technical Field

The present invention relates to a method for producing a conjugated-diene-based copolymer latex. Specifically, the present invention relates to a method for producing a conjugated-diene-based copolymer latex using an ethylenically unsaturated carboxylic acid monomer from which a target particle size can be stably obtained in copolymerization.

### Background Art

Conjugated-diene-based copolymer latexes are widely used as binders in paper coating, carpet backsizing, wood products such as plywood and veneer, battery electrodes, and tire cords.

A conjugated-diene-based copolymer latex is an aqueous dispersion, and dispersion stability in water is essential. Therefore, in order to improve the dispersion stability of a conjugated-diene-based copolymer latex, a method for modifying a conjugated-diene-based copolymer latex with use of an ethylenically unsaturated carboxylic acid monomer is known. For example, in Patent Literature 1, in order to ensure the dispersion stability of a conjugated-diene-based copolymer latex, use of an ethylenically unsaturated carboxylic acid monomer such as acrylic acid, methacrylic acid, itaconic acid, maleic acid and fumaric acid is disclosed.

Further, it is known that the particle size of a conjugated-diene-based copolymer latex contributes to the binder performance and the like, and, for example, in Patent Literature 2, effects of the average particle size of conjugated-diene-based copolymer latex for use in battery electrodes on binding force and resistance to powder falling are disclosed, and, in Patent Literature 3, effects of the average particle size of conjugated-diene-based copolymer latex for use in coated paper on white paper gloss and paint viscosity are disclosed. Accordingly, in order to improve the binder performance, the average particle size tends to be designed to be small.

Patent Literature 4 provides a flooring composition comprising a binder which is a latex copolymer made from a vinyl substituted aromatic monomer, a conjugated diene monomer, an unsaturated acid monomer, and a functional cross-linking agent other than said acid monomer.

In order to impart latex properties and binder characteristics, it is, therefore, important to control the target particle size while maintaining the dispersion stability of a conjugated-diene-based copolymer latex. However, when itaconic acid is used as the ethylenically unsaturated carboxylic acid monomer for the purpose of improving the dispersion stability of the conjugated-diene-based copolymer latex, it tends to be difficult to control the target particle size, causing a problem that affects the operational stability during production of a conjugated-diene-based copolymer latex.

### Citation List

### Patent Literature

Patent Literature 1: Japanese Unexamined Patent Publication No. 2011-219552
Patent Literature 2: Japanese Unexamined Patent Publication No. 2010-205722
Patent Literature 3: Japanese Unexamined Patent Publication No. 2009-68129
Patent Literature 4: EP 0461758 A2 or JP H4-228682 A -

### Summary of Invention

### Technical Problem

An object of the present invention is to provide a method for producing a conjugated-diene-based copolymer latex with use of itaconic acid for the purpose of imparting dispersion stability, which has excellent operational stability during the production of the conjugated-diene-based copolymer latex with easy control of the particle size.

### Solution to Problems

As a result of intensive studies, the present inventors have found that the above problem can be solved with use of a specific itaconic acid, and have completed the present invention.

In other words, the present invention is set out in the appended claims

### Advantageous Effects of Invention

According to the present invention, a method for producing a conjugated-diene-based copolymer latex excellent in the stability of water dispersibility, having excellent operational stability during the production of the conjugated-diene-based copolymer latex with easy control of the particle size, can be provided.

### Brief Description of Drawings

[Figure 1] Figure 1 is a chart showing a chromatogram of an itaconic acid A.
[Figure 2] Figure 2 is a chart showing a chromatogram of an itaconic acid B.

### Description of Embodiments

Hereinafter, the present invention will be described in detail with reference to preferred embodiments thereof.

Examples of the aliphatic conjugated-diene-based monomer for use in the present invention include 1,3-butadiene, 2-methyl-1,3-butadiene, 2,3-dimethyl-1,3-butadiene, 2-chloro-1,3-butadiene, substituted straight-chain conjugated pentadienes, and substituted and side-chain conjugated hexadienes, and one or two or more of these may be used. The use of 1,3-butadiene is particularly preferred from the viewpoint of easiness in industrial production, availability and cost.

As the ethylenically unsaturated carboxylic acid monomer for use in the present invention, itaconic acid is essential, and in addition thereto, one or two or more of monobasic acids or dibasic acids (anhydrides) such as acrylic acid, methacrylic acid, crotonic acid, maleic acid and fumaric acid may be used.

The itaconic acid described above is one having no peak detected at a detection time between 12 minutes and 14 minutes in chromatogram measurement using a liquid chromatograph-corona charged particle detector with a formic acid aqueous solution/acetonitrile as a mobile phase. The measurement conditions are as shown in Examples. By using such an itaconic acid, the resulting conjugated-diene-based copolymer latex is excellent in the stability of water dispersibility and can be easily controlled to a target particle size. The present inventors presume the reason why the effect is exhibited as follows. That is, an itaconic acid having a peak detected at a detection time between 12 minutes and 14 minutes is presumed to contain impurities remaining after insufficient purification and impurities mixed during purification. It is conceivable that the presence of such impurities reduces the stability of water dispersibility of the resulting conjugated-diene-based copolymer latex. In addition, the influence due to impurities becomes more pronounced as the particle size of the conjugated-diene-based copolymer latex to be produced decreases, and control to a target particle size tends to become difficult when obtaining fine particles. In contrast, with use of an itaconic acid having no peak detected at a detection time between 12 minutes and 14 minutes, the above-mentioned influence due to impurities can be suppressed, so that the resulting conjugated-diene-based copolymer latex is excellent in the stability of water dispersibility, and control to a target particle size becomes easy.

Examples of the other monomers for use in the present invention include alkenyl aromatic-based monomers, vinyl cyanide-based monomers, unsaturated carboxylic acid alkyl ester-based monomers, unsaturated monomers containing a hydroxyalkyl group, and unsaturated carboxylic acid amide-based monomers.

Examples of the alkenyl aromatic-based monomers include styrene, α-methylstyrene, methyl-α-methylstyrene, vinyltoluene, and divinylbenzene. These may be used singly or in combinations of two or more. Use of styrene is particularly preferred from the viewpoint of easiness in industrial production, availability and cost.

Examples of the vinyl cyanide-based monomers include monomers such as acrylonitrile, methacrylonitrile, α-chloroacrylonitrile, and α-ethylacrylonitrile. These may be used singly or in combinations of two or more. Use of acrylonitrile or methacrylonitrile is particularly preferred from the viewpoint of easiness in industrial production, availability and cost.

Examples of the unsaturated carboxylic acid alkyl ester-based monomers include methyl acrylate, methyl methacrylate, ethyl acrylate, ethyl methacrylate, butyl acrylate, glycidyl methacrylate, dimethyl fumarate, diethyl fumarate, dimethyl maleate, diethyl maleate, dimethyl itaconate, monomethyl fumarate, monoethyl fumarate, and 2-ethylhexyl acrylate. These can be used singly or in combinations of two or more. Use of methyl methacrylate is particularly preferred from the viewpoint of easiness in industrial production, availability and cost.

Examples of the unsaturated monomers containing a hydroxyalkyl group include β-hydroxyethyl acrylate, β-hydroxyethyl methacrylate, hydroxypropyl acrylate, hydroxypropyl methacrylate, hydroxybutyl acrylate, hydroxybutyl methacrylate, 3-chloro-2-hydroxypropyl methacrylate, di-(ethylene glycol)maleate, di-(ethylene glycol)itaconate, 2-hydroxyethyl maleate, bis(2-hydroxyethyl)maleate, and 2-hydroxyethylmethyl fumarate. These may be used singly or in combinations of two or more.

Examples of the unsaturated carboxylic acid amide-based monomers include acrylamide, methacrylamide, N-methylol acrylamide, N-methylol methacrylamide, and N,N-dimethylacrylamide. These may be used singly or in combinations of two or more.

In addition to the monomers described above, any of the monomers used in normal emulsion polymerization, such as ethylene, propylene, vinyl acetate, vinyl propionate, vinyl chloride, and vinylidene chloride, may be used.

The conjugated-diene-based copolymer latex produced in accordance with a first aspect of the
present invention is obtained by emulsion-polymerizing monomer components containing 10 to 80 mass% of an aliphatic conjugated-diene-based monomer, 2 to 15 mass% of an ethylenically unsaturated carboxylic acid monomer, and 5 to 88 mass% of another copolymerizable monomer, wherein the ethylenically unsaturated carboxylic acid monomer includes an itaconic acid having no peak detected at a detection time between 12 minutes and 14 minutes in a chromatogram under the conditions disclosed herein and the monomer components contain 2 to 10 mass% of the itaconic acid.

In accordance with a further aspect of the invention, the conjugated-diene-based copolymer latex is obtained by emulsion-polymerizing monomer components containing 10 to 80 mass% of an aliphatic conjugated-diene-based monomer, 0.5 to 15 mass% of an ethylenically unsaturated carboxylic acid monomer, and 5 to 89.5 mass% of another copolymerizable monomer, wherein the ethylenically unsaturated carboxylic acid monomer includes an itaconic acid having no peak detected at a detection time between 12 minutes and 14 minutes in a chromatogram under the conditions disclosed herein and the other copolymerizable monomer includes a vinyl cyanide-based monomer. In accordance with still a further aspect of the invention, the conjugated-diene-based copolymer latex is obtained by emulsion-polymerizing monomer components containing 10 to 80 mass% of an aliphatic conjugated-diene-based monomer, 0.5 to 15 mass% of an ethylenically unsaturated carboxylic acid monomer, and 5 to 89.5 mass% of another copolymerizable monomer, wherein the ethylenically unsaturated carboxylic acid monomer includes an itaconic acid having no peak detected at a detection time between 12 minutes and 14 minutes in a chromatogram under the conditions disclosed herein and the other copolymerizable monomer includes an unsaturated carboxylic acid alkyl ester-based monomer.

The total amount of the aliphatic conjugated-diene-based monomer, the ethylenically unsaturated carboxylic acid monomer, and the other copolymerizable monomer is 100 mass%.

The monomer components are required to contain 10 to 80 mass% of an aliphatic conjugated-diene-based monomer based on the total amount of the monomer components. With a content of less than 10 mass%, the rubber elastic modulus of a latex film tends to be inferior, while with a content of more than 80 mass%, the stress tends to decrease greatly. From the viewpoint of further improving the rubber elastic modulus and stress of a latex film, the content of the aliphatic conjugated-diene-based monomer is preferably 25 to 60 mass%.

The monomer component is required to contain 2 to 15 mass% or 0.5 to 15 mass%, respectively, of the ethylenically unsaturated carboxylic acid monomer based on the total amount of the monomer components. With a content of less than 0.5 mass%, the stability of dispersion in water tends to be inferior, while with a content of more than 15 mass%, the viscosity of the conjugated-diene-based copolymer latex tends to be too high. From the viewpoint of further improving the stability of dispersion in water of the conjugated-diene-based copolymer latex and further reducing the viscosity, the content of the ethylenically unsaturated carboxylic acid monomer is preferably 2 to 10 mass%.

Further, itaconic acid is essential as the ethylenically unsaturated carboxylic acid monomer, and the content of itaconic acid in the monomer components is 2 to 10 mass%, preferably 2 to 8 mass%, particularly preferably 2 to 6 mass%, in the method of the first aspect, and preferably 0.5 to 10 mass%, more preferably 1 to 8 mass%, particularly preferably 2 to 6 mass%, in the methods of the further aspects, based on the total amount of monomer components. Use of itaconic acid within the range enables a more remarkable effect of the present invention to be obtained.

The monomer components need to contain 5 to 88 mass% or 5 to 89.5 mass%, respectively, of another copolymerizable monomer based on the total amount of the monomer components. With a content of less than 5 mass%, the blocking resistance tends to be inferior, while with a content of more than 89.5 mass%, the impact absorption tends to be inferior. From the viewpoint of further improving the blocking resistance and impact absorption of a latex film, the content of another copolymerizable monomer is preferably 30 to 73 mass%.

In emulsion polymerization, in addition to the monomer components described above, an emulsifier (surfactant), a polymerization initiator, and on an as needed basis, a chain transfer agent, a reducing agent and the like may be compounded.

As the emulsifiers (surfactants), anionic emulsifiers such as higher alcohol sulfates, alkylbenzene sulfonates, alkyl diphenyl ether sulfonates, aliphatic sulfonates, aliphatic carboxylates, and sulfates of nonionic surfactants; and nonionic emulsifiers such as alkyl esters, alkylphenyl ethers, and alkyl ethers of polyethylene glycol, may be used singly or in combinations of two or more. Although the compounding amount of the emulsifier is not particularly limited, an amount of 0.2 to 2.4 parts by mass relative to 100 parts by mass of the monomer components is preferred.

Examples of the polymerization initiator include water-soluble polymerization initiators such as lithium persulfate, potassium persulfate, sodium persulfate, and ammonium persulfate; and oil-soluble polymerization initiators such as cumene hydroperoxide, benzoyl peroxide, t-butyl hydroperoxide, acetyl peroxide, diisopropylbenzene hydroperoxide, and 1,1,3,3-tetramethylbutyl hydroperoxide. These may be used singly or in combinations of two or more. From the viewpoint of easiness in industrial production, availability and cost, it is particularly preferable to select one from potassium persulfate, sodium persulfate, cumene hydroperoxide, and t-butyl hydroperoxide. The compounding amount of the polymerization initiator is appropriately adjusted in consideration of the composition of monomers, the pH of the polymerization reaction system, and the combination of other additives, though not particularly limited.

Examples of the chain transfer agent include alkyl mercaptans such as n-hexyl mercaptan, n-octyl mercaptan, t-octyl mercaptan, n-dodecyl mercaptan, t-dodecyl mercaptan, and n-stearyl mercaptan; xanthogen compounds such as dimethylxanthogen disulfide and diisopropylxanthogen disulfide; thiuram compounds such as tetramethylthiuram disulfide, tetraethylthiuram disulfide, and tetramethylthiuram monosulfide; phenolic compounds such as 2,6-di-t-butyl-4-methylphenol and styrenated phenol; allyl compounds such as allyl alcohol; halogenated hydrocarbon compounds such as dichloromethane, dibromomethane, and carbon tetrabromide; vinyl ethers such as α-benzyloxystyrene, α-benzyloxyacrylonitrile, and α-benzyloxyacrylamide; and chain transfer agents such as triphenylethane, pentaphenylethane, acrolein, methacrolein, thioglycolic acid, thiomalic acid, 2-ethylhexylthioglycolate, terpinolene, and α-methylstyrene dimer. These may be used singly or in combinations of two or more. The compounding amount of the chain transfer agent may be appropriately adjusted in consideration of the combination of other additives.

Examples of the reducing agent include reducing sugars such as dextrose and saccharose; amines such as dimethylaniline and triethanolamine; carboxylic acids such as L-ascorbic acid, erythorbic acid, tartaric acid, and citric acid and salts thereof; sulfites, bisulfites, pyrosulfites, nithionite, nithionates, thiosulfates, formaldehyde sulfonates, and benzaldehyde sulfonates. From the viewpoint of easiness in industrial production, availability and cost, it is particularly preferable to select one from L-ascorbic acid and erythorbic acid. The compounding amount of the reducing agent may be appropriately adjusted in consideration of the combination of other additives.

Also, in the emulsion polymerization described above, hydrocarbon compounds including saturated hydrocarbons such as pentane, hexane, heptane, octane, cyclohexane, and cycloheptane; unsaturated hydrocarbons such as pentene, hexene, heptene, cyclopentene, cyclohexene, cycloheptene, 4-methylcyclohexene, and 1-methylcyclohexene; aromatic hydrocarbons such as benzene, toluene and xylene may be used. In particular, cyclohexene and toluene, which have a moderately low boiling point and can be easily collected and reused by steam distillation or the like after completion of polymerization, are suitable from the viewpoint of environmental issues, independently from the object of the present invention.

Furthermore, known additives such as oxygen scavengers, chelating agents, and dispersants may be appropriately used on an as needed basis, without specific limitations on the type and the amount of use. Furthermore, known additives such as antifoaming agents, anti-aging agents, antiseptics, antibacterial agents, flame retardants, and UV absorbers may be appropriately used on an as needed basis, without specific limitations on the type and the amount of use.

The temperature during the emulsion polymerization is set preferably in the range of 30 to 100°C, more preferably in the range of 40 to 90°C, from the viewpoint of the pressure in a tank with consideration for safety and productivity.

Examples of the method of adding monomer components and other components in emulsion polymerization include a batch addition method, a split addition method, a continuous addition method, and a powered feed method. Among them, it is preferable to employ a continuous addition method. Further, the continuous addition method may be performed a plurality of times.

The reaction time of the emulsion polymerization is, for example, preferably 1 to 15 hours, more preferably 2 to 10 hours, from the viewpoint of productivity.

Also, it is preferable that the emulsion polymerization reaction be terminated after confirming that the polymer conversion rate exceeds 97%. A copolymer latex is thus obtained. Incidentally, the polymer conversion rate may be calculated from the solid content or from the amount of heat for cooling the polymerization tank.

From the viewpoint of the stability of dispersion, the copolymer latex obtained is adjusted to preferably pH 5 to 9.5, more preferably pH 5.5 to 8.5, with ammonia, potassium hydroxide, sodium hydroxide or the like.

Also, it is preferable that from the copolymer latex obtained, unreacted monomers and other low-boiling point compounds be removed by a method such as steam distillation.

It is preferable that the average particle size of the conjugated-diene-based copolymer latex obtained by the production method of the present invention be 40 nm or more and 300 nm or less, and the upper limit is more preferably 150 nm or less, particularly preferably 110 nm or less. Incidentally, the average particle diameter is obtained by analysis by a photon correlation method using dynamic light scattering. With an average particle size of the conjugated-diene-based copolymer latex in the range described above, the binder performance tends to be further improved. On the other hand, especially in the range of the average particle size, control to a target particle size tends to be more difficult, and the influence of malfunctions on the operational stability during production of the conjugated-diene-based copolymer latex tends to be great. In contrast, by using the production method of the present invention, the problem can be solved even with an average particle diameter in the range.

### Examples

Although the present invention is described more specifically with reference to Examples as follows, the present invention is not limited to these Examples In Examples, parts and % indicating proportions are based on mass unless otherwise specified. Incidentally, various physical properties in Examples were evaluated by the following methods.

### (Measurement of average particle size of conjugated-diene-based copolymer latex)

The average particle size was measured with FPAR-1000 (manufactured by Otsuka Electronics Co., Ltd.) after filtration of the conjugated-diene-based copolymer latex obtained with a 200-mesh wire mesh.

### (Measurement of average particle size after filtration with filter of conjugated-diene-based copolymer latex)

The average particle size after filtration with filter was measured with FPAR-1000 (manufactured by Otsuka Electronics), after filtration of the conjugated-diene-based copolymer latex obtained through a 200-mesh wire mesh and subsequent filtration through a filter having a filter pore size of 0.45 µm (Captiva Econofilter, manufactured by Agilent Technologies).

### (Content of aggregates with a size of 2 µm or more and 50 µm or less in conjugated-diene-based copolymer latex)

The content of aggregates having a particle size of 2 µm or more and 50 µm or less in the conjugated-diene-based copolymer latex obtained in the number-based particle size distribution was measured with a pore electrical resistance-type particle size distribution analyzer (Coulter Multisizer 3 manufactured by Beckman Coulter).

### (Measurement of itaconic acid with liquid chromatograph-corona charged particle detector)

Measuring instrument: Alliance 2695 (manufactured by Waters)
Column: Intertsil ODS-4 (particle size: 3 µm, inner diameter: 2.1 mm, length: 150 mm) (manufactured by GL Sciences Inc.)

### <Measurement conditions>

With a sample concentration of 1 mass% (pure water as solvent), a column temperature of 40°C, and a 0.5% formic acid aqueous solution/acetonitrile as a mobile phase, a solution was fed at a rate of 0.2 mL/min. Incidentally, gradient elution was performed in control of the mobile phase, so that in a detection time from 0 to 5 minutes, the acetonitrile content in the mobile phase was controlled to 5%, in a detection time from 5 to 20 minutes, the acetonitrile content in the mobile phase was gradually increased from 5% to 90%, and in a detection time from 20 minutes to 25 minutes, the acetonitrile content in the mobile phase was controlled to 90%.

Itaconic acid A: In the chromatogram measured with the liquid chromatograph-corona charged particle detector, no peak was detected at a detection time between 12 minutes and 14 minutes.

Itaconic acid B: In the chromatogram measured with the liquid chromatograph-corona charged particle detector, a peak was detected at a detection time between 12 minutes and 14 minutes.

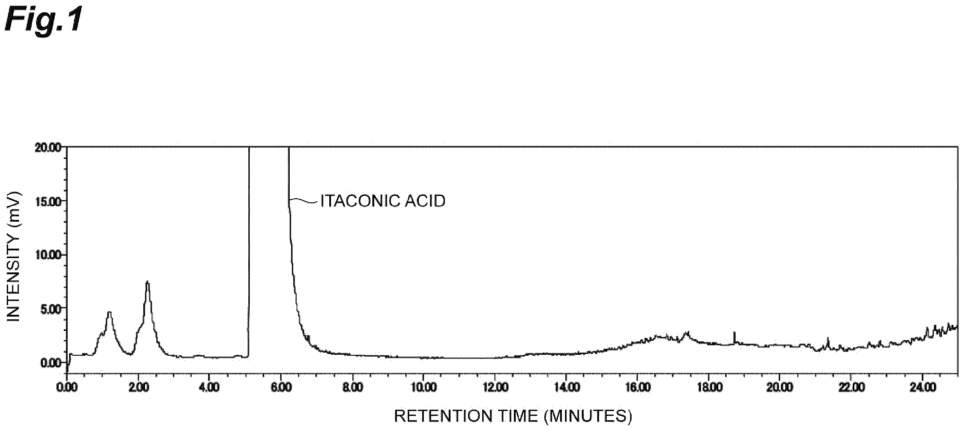

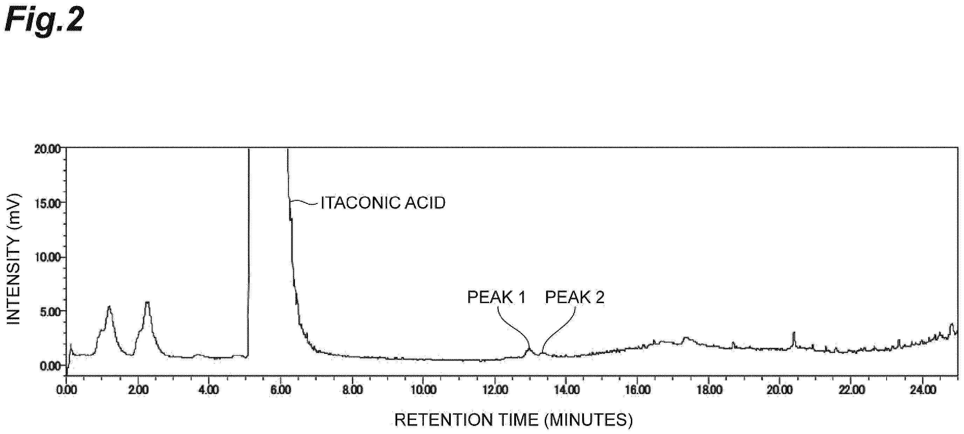

In Figure 1, a chromatogram of the itaconic acid A is shown, and in Figure 2, a chromatogram of the itaconic acid B is shown, respectively. As shown in Figure 1, in the chromatogram of the itaconic acid A, no peak was detected at a detection time (retention time) between 12 minutes and 14 minutes. In contrast, as shown in Figure 2, in the chromatogram of the itaconic acid B, a peak 1 and a peak 2 were detected at a detection time (retention time) between 12 minutes to 14 minutes.

### (Example 1)

In a pressure-resistant polymerization reaction vessel equipped with a stirrer, 150 parts of polymerization water and first-stage polymerization components in Table 1 were fed all at once, and the temperature was raised to 85°C to proceed a polymerization reaction. The polymerization was terminated when the polymerization conversion rate exceeded 98%. Subsequently, the pH was adjusted to 7 with sodium hydroxide, and steam distillation was performed to remove unreacted monomers and other low-boiling compounds, so that a conjugated-diene-based copolymer latex A was obtained.

### (Example 2)

In a pressure-resistant polymerization reaction vessel equipped with a stirrer, 100 parts of polymerization water and the first-stage polymerization components in Table 1 were fed all at once, and with the temperature raised to 70°C, the second-stage polymerization components in Table 1 were continuously added for 7 hours. After completion of addition of the second-stage polymerization components, the temperature was raised to 80°C, and the polymerization was further continued. The polymerization was terminated when the polymerization conversion rate exceeded 98%. Subsequently, the pH was adjusted to 7 with sodium hydroxide, and steam distillation was performed to remove unreacted monomers and other low-boiling compounds, so that a conjugated-diene-based copolymer latex B was obtained.

### (Example 3)

In a pressure-resistant polymerization reaction vessel equipped with a stirrer, 200 parts of polymerization water and the first-stage polymerization components shown in Table 1 were fed all at once, and the temperature was raised to 70°C to proceed a polymerization reaction for 2 hours. After confirming the polymerization conversion rate reached 80% or more, monomer components of the second-stage polymerization components shown in Table 1 were continuously added for 6 hours while maintaining the reaction temperature at 70°C. After lapse of 3 hours from the start of addition of the monomer components of the second-stage polymerization components, 0.5 parts of α-methylstyrene dimer and 0.1 parts of dodecyl mercaptan were added.

After completion of addition of the second-stage polymerization components, with the temperature raised to 80°C, the polymerization was further continued and terminated when the polymerization conversion rate exceeded 98%. Subsequently, the pH was adjusted to 7 with sodium hydroxide, and steam distillation was performed to remove unreacted monomers and other low-boiling compounds, so that a conjugated-diene-based copolymer latex C was obtained.

### (Example 4)

In a pressure-resistant polymerization reaction vessel equipped with a stirrer, 250 parts of polymerization water and the first-stage polymerization components in Table 1 were fed all at once, and the temperature was raised to 85°C to proceed a polymerization reaction. The polymerization was terminated when the polymerization conversion rate exceeded 98%. Subsequently, the pH was adjusted to 7 with sodium hydroxide, and steam distillation was performed to remove unreacted monomers and other low-boiling compounds, so that a conjugated-diene-based copolymer latex D was obtained.

### (Example 5)

In a pressure-resistant polymerization reaction vessel equipped with a stirrer, 100 parts of polymerization water and the first-stage polymerization components in Table 1 were fed all at once, and with the temperature raised to 70°C, the second-stage polymerization components in Table 1 were continuously added for 7 hours. After completion of addition of the second-stage polymerization components, with the temperature raised to 80°C, the polymerization was further continued and terminated when the polymerization conversion rate exceeded 98%. Subsequently, the pH was adjusted to 7 with sodium hydroxide, and steam distillation was performed to remove unreacted monomers and other low-boiling compounds, so that a conjugated-diene-based copolymer latex E was obtained.

### (Example 6)

In a pressure-resistant polymerization reaction vessel equipped with a stirrer, 150 parts of polymerization water and the first-stage polymerization components in Table 1 were fed all at once, and with the temperature raised to 70°C, the second-stage polymerization components in Table 1 were continuously added for 7 hours. After completion of addition of the second-stage polymerization components, with the temperature raised to 80°C, the polymerization was further continued and terminated when the polymerization conversion rate exceeded 98%. Subsequently, the pH was adjusted to 7 with sodium hydroxide, and steam distillation was performed to remove unreacted monomers and other low-boiling compounds, so that a conjugated-diene-based copolymer latex F was obtained.

### (Example 7)

In a pressure-resistant polymerization reaction vessel equipped with a stirrer, 150 parts of polymerization water and the first-stage polymerization components in Table 1 were fed all at once, and the temperature was raised to 85°C to proceed a polymerization reaction. The polymerization was terminated when the polymerization conversion rate exceeded 98%. Subsequently, the pH was adjusted to 7 with sodium hydroxide, and steam distillation was performed to remove unreacted monomers and other low-boiling compounds, so that a conjugated-diene-based copolymer latex G was obtained.

### (Comparative Example 1)

A conjugated-diene-based copolymer latex H was obtained in the same manner as in Example 1, except that the itaconic acid A was replaced with the itaconic acid B.

### (Comparative Example 2)

A conjugated-diene-based copolymer latex I was obtained in the same manner as in Example 2, except that the itaconic acid A was replaced with the itaconic acid B.

### (Comparative Example 3)

A conjugated-diene-based copolymer latex J was obtained in the same manner as in Example 3, except that the itaconic acid A was replaced with the itaconic acid B.

Each component in the following Table 1 and Table 2 is indicated by the following abbreviation.

### (Monomer components)

BDE: 1,3-butadiene
STY: styrene
MMA: methyl methacrylate
ACN: acrylonitrile
FA: fumaric acid
AA: acrylic acid
AAM: acrylamide
(other compounds)
EML: sodium dodecylbenzenesulfonate (Neopelex G-15, manufactured by Kao Corporation) (anionic emulsifier)
KPS: potassium persulfate (polymerization initiator)
α-MSD: α-methylstyrene dimer (chain transfer agent)
NaHCO₃: sodium hydrogen carbonate
CHX: cyclohexene (unsaturated hydrocarbon)
TDM: t-dodecyl mercaptan (chain transfer agent)

**[Table 1]**

| | **Example 1** | | **Example 2** | | | **Example 3** | | | **Example 4** | | **Example 5** | | | **Example 6** | | | **Example 7** | |
|---|---|---|---|---|---|---|---|---|---|---|---|---|---|---|---|---|---|---|
| | A | | B | | | C | | | D | | E | | | F | | | G | |
| | **First stage** | **Total** | **First stage** | **Second stage** | **Total** | **First stage** | **Second stage** | **Total** | **First stage** | **Total** | **First stage** | **Second stage** | **Total** | **First stage** | **Second stage** | **Total** | **First stage** | **Total** |
| BDE | 42 | 42 | 2.2 | 33 | 35.2 | 6 | 34 | 40 | 77 | 77 | 2.2 | 10 | 12.2 | 2.2 | 30.3 | 32.5 | 42.9 | 42.9 |
| STY | 31 | 31 | 34 | 32 | 35.4 | 4 | 7 | 11 | 14 | 14 | 4.3 | 51 | 55.3 | 2.1 | 29 | 31.1 | 31 | 31 |
| MMA | 1 | 1 | 2.8 | 9.2 | 12 | 3.5 | 8.5 | 12 | - | - | 2.8 | 9.3 | 12.1 | 1.8 | 9.8 | 11.6 | 3 | 3 |
| ACN | 21 | 21 | 1.2 | 12.2 | 13.4 | - | 30 | 30 | 5 | 5 | 1.2 | 12.4 | 13.6 | 1.4 | 10.4 | 11.8 | 22 | 22 |
| **Itaconic acid A** | 4 | 4 | 2.2 | - | 2.2 | 1.5 | 2.5 | 4 | 4 | 4 | 5 | - | 5 | 8 | - | 8 | 0.7 | 0.7 |
| **Itaconic acid B** | - | - | - | - | - | - | - | - | - | - | - | - | - | - | - | - | - | - |
| FA | 0.5 | 0.5 | 1 | - | 1 | - | - | - | - | - | 1 | - | 1 | 1 | - | 1 | 0.4 | 0.4 |
| AA | - | - | 0.8 | - | 0.8 | 0.5 | 2.5 | 3 | - | - | 0.8 | - | 0.8 | 4 | - | 4 | - | - |
| AAM | 0.5 | 0.5 | - | - | - | - | - | - | - | - | - | - | - | - | - | - | - | - |
| EML | 1.5 | 1.5 | 0.7 | - | 0.7 | 0.6 | - | 0.6 | 2.2 | 2.2 | 0.8 | - | 0.8 | 0.7 | - | 0.7 | 0.8 | 0.8 |
| KPS | 1.2 | 1.2 | 0.9 | - | 0.9 | 1.0 | - | 1.0 | 0.24 | 0.24 | 0.9 | - | 0.9 | 0.9 | - | 0.9 | 1.2 | 1.2 |
| *α* -MSD | - | - | - | - | - | 0.2 | 0.5 | 0.7 | - | - | - | - | - | - | - | - | - | - |
| NaHCO₃ | - | - | - | - | - | 0.5 | - | 0.5 | - | - | - | - | - | - | - | - | - | - |
| CHX | 12 | 12 | 10 | - | 10 | - | - | - | - | - | 10 | - | 10 | 10 | - | 10 | 12 | 1.2 |
| TDM | 0.21 | 0.21 | 0.109 | - | 0.109 | 0.1 | 0.1 | 0.2 | 0.2 | 0.2 | 0.2 | - | 0.2 | 0.109 | - | 0.109 | 0.21 | 0.21 |
| **Average particle size (nm)** | 70 | | 140 | | | 80 | | | 50 | | 100 | | | 90 | | | 70 | |
| **Average particle size (nm) after filtration with filter** | 70 | | 140 | | | 80 | | | 50 | | 100 | | | 90 | | | 70 | |
| **Content of aggregate having size of 2 to 50 µm (%)** | 0.057 | | 0.105 | | | 0.086 | | | 0.066 | | 0.138 | | | 0.087 | | | 0.108 | |

**[Table 2]**

| | **Comparative Example 1** | | **Comparative Example 2** | | | **Comparative Example 3** | | |
|---|---|---|---|---|---|---|---|---|
| | H | | I | | | J | | |
| | **First stage** | **Total** | **First stage** | **Second stage** | **Total** | **First stage** | **Second stage** | **Total** |
| BDE | 42 | 42 | 2.2 | 33 | 35.2 | 6 | 34 | 40 |
| STY | 31 | 31 | 3.4 | 32 | 35.4 | 4 | 7 | 11 |
| MMA | 1 | 1 | 2.8 | 9.2 | 12 | 3.5 | 8.5 | 12 |
| ACN | 21 | 21 | 1.2 | 12.2 | 13.4 | - | 30 | 30 |
| Itaconic acid A | - | - | - | - | - | - | - | - |
| Itaconic acid B | 4 | 4 | 2.2 | - | 2.2 | 1.5 | 2.5 | 4 |
| FA | 0.5 | 0.5 | 1 | - | 1 | - | - | - |
| AA | | | 0.8 | - | 0.8 | 0.5 | 2.5 | 3 |
| AAM | 0.5 | 0.5 | - | - | - | - | - | - |
| EML | 1.5 | 1.5 | 0.7 | - | 0.7 | 0.6 | - | 0.6 |
| KPS | 1.2 | 1.2 | 0.9 | - | 0.9 | 1 | - | 1 |
| *α*-M5D | - | - | - | - | - | 0.2 | 0.5 | 0.2 |
| NaHCO₃ | - | - | - | - | - | 0.5 | - | 0.5 |
| CHX | 12 | 12 | 10 | - | 10 | - | - | - |
| TDM | 0.21 | 0.21 | 0.109 | - | 0.109 | 0.1 | 0.1 | 0.2 |
| **Average particle size (nm)** | 110 | | 160 | | | 120 | | |
| **Average particle size (nm) after filtration with filter** | 75 | | 140 | | | 80 | | |
| **Content of aggregate having size of 2 to 50 µm (%)** | 0.069 | | 0.128 | | | 0.091 | | |

As shown in Table 1 and Table 2, in Examples 1 to 7, no difference was observed in the average particle size before and after filtration with a filter having a pore size of 0.45 µm. In contrast, in Comparative Examples 1 to 3, although the average particle size after filtration with a filter having a pore size of 0.45 µm was almost the same as that in Examples 1 to 3, the average particle size before filtration was larger than the average particle size after filtration. Further, the content of aggregates having a size of 2 to 50 µm was sufficiently low in any of Examples and Comparative Examples, and no large difference was observed due to the difference in itaconic acid. Because of these, it can be seen that in Comparative Examples, a larger number of aggregates having a size of about 0.45 to 2 µm are present than in Example. Therefore, it has been revealed that particles having a target average particle size can be stably obtained in Examples than in Comparative Examples, so that operational stability during production of conjugated-diene-based copolymer latexes is excellent in Examples.

## Claims

1. A method for producing a conjugated-diene-based copolymer latex, comprising:
a step of emulsion-polymerizing monomer components including 10 to 80 mass% of an aliphatic conjugated-diene-based monomer, 2 to 15 mass% of an ethylenically unsaturated carboxylic acid monomer, and 5 to 88 mass% of another copolymerizable monomer,
wherein the ethylenically unsaturated carboxylic acid monomer includes an itaconic acid having no peak detected at a detection time between 12 minutes and 14 minutes in a chromatogram measured under the following measurement conditions:
<Measurement conditions>
With use of a liquid chromatograph-corona charged particle detector, measurement is performed with a sample concentration of 1 mass%, pure water as a solvent, a column temperature of 40°C, a formic acid aqueous solution/acetonitrile as a mobile phase, and a liquid feed rate of 0.2 ml/min, and
wherein the monomer components contain 2 to 10 mass% of the itaconic acid.

2. The method for producing a conjugated-diene-based copolymer latex according to claim 1, wherein the other copolymerizable monomer includes a vinyl cyanide-based monomer.

3. The method for producing a conjugated-diene-based copolymer latex according to claim 1, wherein the other copolymerizable monomer includes an unsaturated carboxylic acid alkyl ester-based monomer.

4. A method for producing a conjugated-diene-based copolymer latex, comprising:
a step of emulsion-polymerizing monomer components including 10 to 80 mass% of an aliphatic conjugated-diene-based monomer, 0.5 to 15 mass% of an ethylenically unsaturated carboxylic acid monomer, and 5 to 89.5 mass% of another copolymerizable monomer,
wherein the ethylenically unsaturated carboxylic acid monomer includes an itaconic acid having no peak detected at a detection time between 12 minutes and 14 minutes in a chromatogram measured under the following measurement conditions:
<Measurement conditions>
With use of a liquid chromatograph-corona charged particle detector, measurement is performed with a sample concentration of 1 mass%, pure water as a solvent, a column temperature of 40°C, a formic acid aqueous solution/acetonitrile as a mobile phase, and a liquid feed rate of 0.2 ml/min, and
wherein the other copolymerizable monomer includes a vinyl cyanide-based monomer.

5. A method for producing a conjugated-diene-based copolymer latex, comprising:
a step of emulsion-polymerizing monomer components including 10 to 80 mass% of an aliphatic conjugated-diene-based monomer, 0.5 to 15 mass% of an ethylenically unsaturated carboxylic acid monomer, and 5 to 89.5 mass% of another copolymerizable monomer,
wherein the ethylenically unsaturated carboxylic acid monomer includes an itaconic acid having no peak detected at a detection time between 12 minutes and 14 minutes in a chromatogram measured under the following measurement conditions:
<Measurement conditions>
With use of a liquid chromatograph-corona charged particle detector, measurement is performed with a sample concentration of 1 mass%, pure water as a solvent, a column temperature of 40°C, a formic acid aqueous solution/acetonitrile as a mobile phase, and a liquid feed rate of 0.2 ml/min, and
wherein the other copolymerizable monomer includes an unsaturated carboxylic acid alkyl ester-based monomer.

6. The method for producing a conjugated-diene-based copolymer latex according to claim 4 or 5, wherein the monomer components contain 0.5 to 10 mass% of the itaconic acid.

7. The method for producing a conjugated-diene-based copolymer latex according to any of claims 1 to 6, wherein the conjugated-diene-based copolymer latex has an average particle size of 40 nm or more and 110 nm or less.

8. The method for producing a conjugated-diene-based copolymer latex according to any of claims 1 to 7, wherein the ethylenically unsaturated carboxylic acid monomer includes a monobasic acid.

## Patentansprüche

1. Ein Verfahren zur Herstellung eines Copolymerlatex auf der Basis eines konjugierten Diens, umfassend:
einen Schritt der Emulsionspolymerisation von Monomerkomponenten, beinhaltend 10 bis 80 Massen-% eines Monomers auf der Basis eines aliphatischen konjugierten Diens, 2 bis 15 Massen-% eines ethylenisch ungesättigten Carbonsäuremonomers und 5 bis 88 Massen-% eines anderen copolymerisierbaren Monomers,
wobei das ethylenisch ungesättigte Carbonsäuremonomer eine Itaconsäure beinhaltet, für die der bei einer Nachweiszeit zwischen 12 Minuten und 14 Minuten in einem Chromatogramm, gemessen unter den folgenden Messbedingungen, kein Peak nachgewiesen wird:
<Messbedingungen>
Unter Verwendung eines Flüssigchromatographen-Detektors für Teilchen mit Coronaaufladung wird eine Messung mit einer Probenkonzentration von 1 Massen-%, reinem Wasser als Lösungsmittel, einer Säulentemperatur von 40°C, einer wässrigen Ameisensäurelösung/Acetonitril als mobile Phase und einer Flüssigkeitszufuhrgeschwindigkeit von 0,2 ml/min durchgeführt, und
wobei die Monomerkomponenten 2 bis 10 Massen-% der Itaconsäure enthalten.

2. Das Verfahren zur Herstellung eines Copolymerlatex auf der Basis eines konjugierten Diens nach Anspruch 1, wobei das andere copolymerisierbare Monomer ein Monomer auf Vinylcyanid-Basis beinhaltet.

3. Das Verfahren zur Herstellung eines Copolymerlatex auf der Basis eines konjugierten Diens nach Anspruch 1, wobei das andere copolymerisierbare Monomer ein Monomer auf der Basis eines ungesättigten Carbonsäurealkylesters beinhaltet.

4. Ein Verfahren zur Herstellung eines Copolymerlatex auf der Basis eines konjugierten Diens, umfassend:
einen Schritt der Emulsionspolymerisation von Monomerkomponenten, beinhaltend 10 bis 80 Massen-% eines Monomers auf der Basis eines aliphatischen konjugierten Diens, 0,5 bis 15 Massen-% eines ethylenisch ungesättigten Carbonsäuremonomers und 5 bis 89,5 Massen-% eines anderen copolymerisierbaren Monomers,
wobei das ethylenisch ungesättigte Carbonsäuremonomer eine Itaconsäure beinhaltet, für die bei einer Nachweiszeit zwischen 12 Minuten und 14 Minuten in einem Chromatogramm, gemessen unter den folgenden Messbedingungen, kein Peak nachgewiesen wird:
<Messbedingungen>
Unter Verwendung eines Flüssigchromatograph-Detektors für Teilchen mit Coronaaufladung wird eine Messung mit einer Probenkonzentration von 1 Massen-%, reinem Wasser als Lösungsmittel, einer Säulentemperatur von 40°C, einer wässrigen Ameisensäurelösung/Acetonitril als mobile Phase und einer Flüssigkeitszufuhrgeschwindigkeit von 0,2 ml/min durchgeführt, und
wobei das andere copolymerisierbare Monomer ein Monomer auf Vinylcyanid-Basis beinhaltet.

5. Ein Verfahren zur Herstellung eines Copolymerlatex auf der Basis eines konjugierten Diens, umfassend:
einen Schritt der Emulsionspolymerisation von Monomerkomponenten, beinhaltend 10 bis 80 Massen-% eines Monomers auf der Basis eines aliphatischen konjugierten Diens, 0,5 bis 15 Massen-% eines ethylenisch ungesättigten Carbonsäuremonomers und 5 bis 89,5 Massen-% eines anderen copolymerisierbaren Monomers,
wobei das ethylenisch ungesättigte Carbonsäuremonomer eine Itaconsäure beinhaltet, für die bei einer Nachweiszeit zwischen 12 Minuten und 14 Minuten in einem Chromatogramm, gemessen unter den folgenden Messbedingungen, kein Peak nachgewiesen wird:
<Messbedingungen>
Unter Verwendung eines Flüssigchromatograph-Detektors für Teilchen mit Coronaaufladung wird eine Messung mit einer Probenkonzentration von 1 Massen-%, reinem Wasser als Lösungsmittel, einer Säulentemperatur von 40°C, einer wässrigen Ameisensäurelösung/Acetonitril als mobile Phase und einer Flüssigkeitszufuhrgeschwindigkeit von 0,2 ml/min durchgeführt, und
wobei das andere copolymerisierbare Monomer ein Monomer auf der Basis eines ungesättigten Carbonsäurealkylesters beinhaltet.

6. Das Verfahren zur Herstellung eines Copolymerlatex auf der Basis eines konjugierten Diens nach Anspruch 4 oder 5, wobei die Monomerkomponenten 0,5 bis 10 Massen-% der Itaconsäure enthalten.

7. Das Verfahren zur Herstellung eines Copolymerlatex auf der Basis eines konjugierten Diens nach einem der Ansprüche 1 bis 6, wobei der Copolymerlatex auf der Basis eines konjugierten Diens eine mittlere Teilchengröße von 40 nm oder mehr und 110 nm oder weniger aufweist.

8. Das Verfahren zur Herstellung eines Copolymerlatex auf der Basis eines konjugierten Diens nach einem der Ansprüche 1 bis 7, wobei das ethylenisch ungesättigte Carbonsäuremonomer eine einbasige Säure beinhaltet.

## Revendications

1. Méthode pour produire un latex de copolymère à base de diène conjugué, comprenant :
une étape de polymérisation en émulsion de composants monomères comprenant 10 à 80 % en masse d'un monomère à base de diène conjugué aliphatique, 2 à 15 % en masse d'un monomère d'acide carboxylique à insaturation éthylénique, et 5 à 88 % en masse d'un autre monomère copolymérisable,
dans laquelle le monomère d'acide carboxylique à insaturation éthylénique comprend un acide itaconique n'ayant pas de pic détecté à un temps de détection compris entre 12 minutes et 14 minutes dans un chromatogramme mesuré dans les conditions de mesure suivantes :
<Conditions de mesure>
Par l'utilisation d'un détecteur de particules chargées par couronne en chromatographie liquide, la mesure est effectuée avec une concentration d'échantillon de 1 % en masse, de l'eau pure en tant que solvant, une température de colonne de 40 °C, une solution aqueuse d'acide formique/acétonitrile en tant que phase mobile, et un débit d'introduction de liquide de 0,2 ml/min, et
dans laquelle les composants monomères contiennent 2 à 10 % en masse de l'acide itaconique.

2. Méthode pour produire un latex de copolymère à base de diène conjugué selon la revendication 1, dans laquelle l'autre monomère copolymérisable comprend un monomère à base de cyanure de vinyle.

3. Méthode pour produire un latex de copolymère à base de diène conjugué selon la revendication 1, dans laquelle l'autre monomère copolymérisable comprend un monomère à base d'ester alkylique d'acide carboxylique insaturé.

4. Méthode pour produire un latex de copolymère à base de diène conjugué, comprenant :
une étape de polymérisation en émulsion de composants monomères comprenant 10 à 80 % en masse d'un monomère à base de diène conjugué aliphatique, 0,5 à 15 % en masse d'un monomère d'acide carboxylique à insaturation éthylénique, et 5 à 89,5 % en masse d'un autre monomère copolymérisable,
dans laquelle le monomère d'acide carboxylique à insaturation éthylénique comprend un acide itaconique n'ayant pas de pic détecté à un temps de détection compris entre 12 minutes et 14 minutes dans un chromatogramme mesuré dans les conditions de mesure suivantes :
<Conditions de mesure>
Par l'utilisation d'un détecteur de particules chargées par couronne en chromatographie liquide, la mesure est effectuée avec une concentration d'échantillon de 1 % en masse, de l'eau pure en tant que solvant, une température de colonne de 40 °C, une solution aqueuse d'acide formique/acétonitrile en tant que phase mobile, et un débit d'introduction de liquide de 0,2 ml/min, et
dans laquelle l'autre monomère copolymérisable comprend un monomère à base de cyanure de vinyle.

5. Méthode pour produire un latex de copolymère à base de diène conjugué, comprenant :
une étape de polymérisation en émulsion de composants monomères comprenant 10 à 80 % en masse d'un monomère à base de diène conjugué aliphatique, 0,5 à 15 % en masse d'un monomère d'acide carboxylique à insaturation éthylénique, et 5 à 89,5 % en masse d'un autre monomère copolymérisable,
dans laquelle le monomère d'acide carboxylique à insaturation éthylénique comprend un acide itaconique n'ayant pas de pic détecté à un temps de détection compris entre 12 minutes et 14 minutes dans un chromatogramme mesuré dans les conditions de mesure suivantes :
<Conditions de mesure>
Par l'utilisation d'un détecteur de particules chargées par couronne en chromatographie liquide, la mesure est effectuée avec une concentration d'échantillon de 1 % en masse, de l'eau pure en tant que solvant, une température de colonne de 40 °C, une solution aqueuse d'acide formique/acétonitrile en tant que phase mobile, et un débit d'introduction de liquide de 0,2 ml/min, et
dans laquelle l'autre monomère copolymérisable comprend un monomère à base d'ester alkylique d'acide carboxylique insaturé.

6. Méthode pour produire un latex de copolymère à base de diène conjugué selon la revendication 4 ou 5, dans laquelle les composants monomères contiennent 0,5 à 10 % en masse de l'acide itaconique.

7. Méthode pour produire un latex de copolymère à base de diène conjugué selon l'une quelconque des revendications 1 à 6, dans laquelle le latex de copolymère à base de diène conjugué a une taille moyenne de particules de 40 nm ou plus et 110 nm ou moins.

8. Méthode pour produire un latex de copolymère à base de diène conjugué selon l'une quelconque des revendications 1 à 7, dans laquelle le monomère d'acide carboxylique à insaturation éthylénique comprend un acide monobasique.
